# EUROPEAN PATENT SPECIFICATION

(11) **EP 0 969 583 B1**
(45) Date of publication and mention of the grant of the patent: **27.07.2005**
(21) Application number: 99111298.8
(22) Date of filing: 10.06.1999
(51) Int. Cl.: H02K 11/04

(54) **A bridge rectifier for an alternator**
Gleichrichterbrückenschaltung für einen Wechselstromgenerator
Redresseur en pont pour alternateur

(30) Priority: 12.06.1998 IT TO980517
(43) Date of publication of application: 05.01.2000
(73) Proprietor: Denso Manufacturing Italia S.p.A., 20121 Milano (IT)
(72) Inventor: Fagnano, Nicola, 55129 Pescara (IT); Miccoli, Rocco, 66027 Ortona (Chieti) (IT)
(74) Representative: Deambrogi, Edgardo

(56) References cited:
- EP-A- 0 822 642
- EP-A- 0 960 464
- WO-A-89/02161
- DE-A- 19 705 228
- GB-A- 2 235 822
- PATENT ABSTRACTS OF JAPAN vol. 017, no. 593 (E-1454), 28 October 1993 (1993-10-28) -& JP 05 176505 A (NIPPONDENSO CO LTD), 13 July 1993 (1993-07-13)
- PATENT ABSTRACTS OF JAPAN vol. 016, no. 192 (E-1199), 11 May 1992 (1992-05-11) -& JP 04 026346 A (MITSUBA ELECTRIC MFG CO LTD), 29 January 1992 (1992-01-29)

## Description

The present invention relates to a rectifier for an alternator and, in particular, to a bridge rectifier for fitting on a motor vehicle alternator.

More specifically, the subject of the invention is a rectifier comprising:
a pair of cooling conductor plates, that is, a positive plate and a negative plate, which face one another but are insulated from one another and to which are connected, respectively, a set of positive diodes and a set of negative diodes having respective wire rheophores for connection to the phases of the alternator;
an interconnection structure arranged substantially parallel to one of the conductor plates on the opposite side to the other conductor plate and comprising a body of electrically insulating material incorporating connecting conductor elements insulated from one another and each having a first terminal and a second terminal for connection to the rheophores of a positive diode and of a negative diode, respectively, and a third terminal for connection to a phase of the armature winding of the alternator, and
electrically insulating spacing means arranged between the positive and negative plates,
in which the positive and negative plates have, on their outer sides, respective pluralities of peripheral notches in corresponding relative positions and facing the said third terminals of the interconnection structure.

A solution of this type is known from the Applicant's published European patent application No. 0822642, which is deemed to be the closest prior art.

In the rectifier according to EP 0 822 642, the peripheral notches of the positive plate, which is disposed between the interconnection structure and the negative plate, are of a larger size than those of the negative plate, so that they let the rheophores of the diodes carried by the negative plate extend through them.

The arrangement of the phase conductors by the plates, for connection between the armature winding and corresponding terminals of the interconnection structure, is not addressed.

During the fitting of the rectifier of the prior art on the alternator, complications may arise in bringing the end portions of the phase wires to positions corresponding to those of the respective third terminals provided on the interconnection structure.

EP 0 960 464, which is a prior art document under Article 54(3) EPC, relates to a three-phase generator with a rectifier component having a couple of cooling plates bearing positive and negative diodes, an insulating plate sandwiched by the cooling plates, and a printed circuit board at the top of the stack of plates. Both the cooling plates have notches along their outer peripheral edge. The notches formed on the lower, negative plate are arranged to house axially oriented guiding sleeves formed in the outer circumferential area of the insulating plate, which sleeves are adapted to guide the stator winding ends to the respective connecting terminals on the printed circuit board. The notches formed on the upper, positive plate are arranged to allow the negative diodes mounted on the lower plate to reach the respective connecting terminals on the printed circuit board.

WO 89/02161 to Robert Bosch GmbH discloses a rectifier bearing device for generators, which comprises a printed circuit board arranged between a positive and a negative cooling plate, for making the electrical connections with the rheophores of the diodes of each plate and with the stator phase windings. Quiver-like guides extend from the printed circuit board to the stator phase windings and guide the stator leads to the printed circuit board in an insulated manner through the adjacent cooling plate regions.

The object of the present invention is to simplify the assembly of the rectifier and advantageously to facilitate its fitting on the alternator.

This object is achieved by a rectifier according to claim 1.

Further characteristics and advantages of the invention will be explained in further detail in the following detailed description of an embodiment thereof, given by way of non-limiting example with reference to the appended drawings, in which:
Figure 1 is a sectioned view of a motor vehicle alternator on which a rectifier according to the invention is fitted,

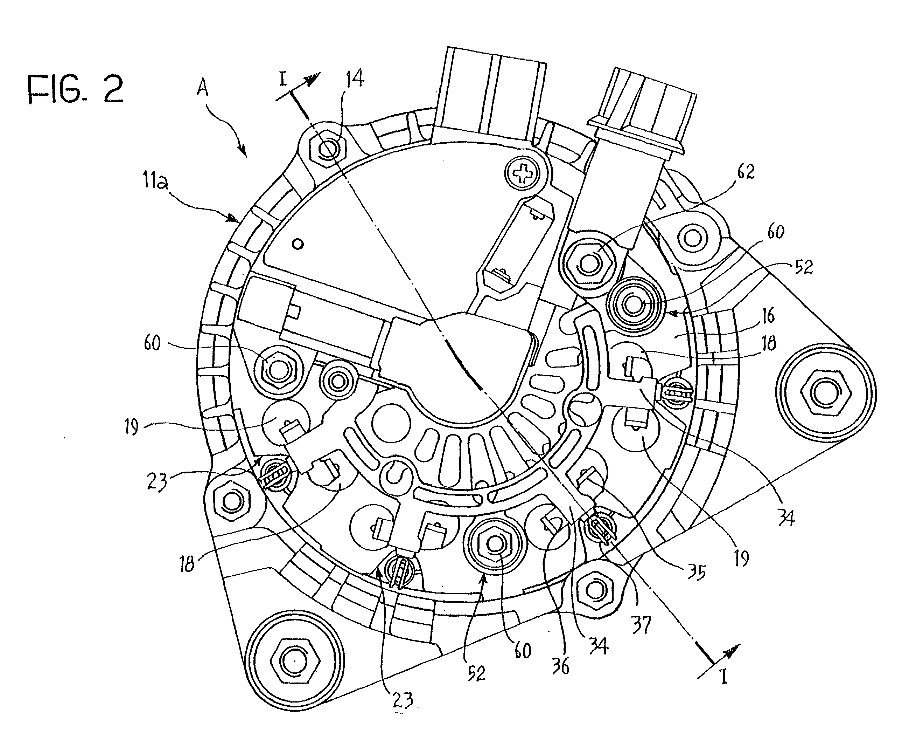

Figure 2 is a plan view taken on the arrow II of Figure 1,
Figure 3 is an exploded perspective view of the rectifier,
Figures 4a and 4b are sections taken on the arrows IVa-IVa and IVb-IVb, respectively, through two portions of the interconnection structure of the rectifier of Figure 3,
Figure 5a is a section taken on the arrow Va-Va through a tubular element of the rectifier, and
Figure 5b is a side view of a spacer element of the rectifier.

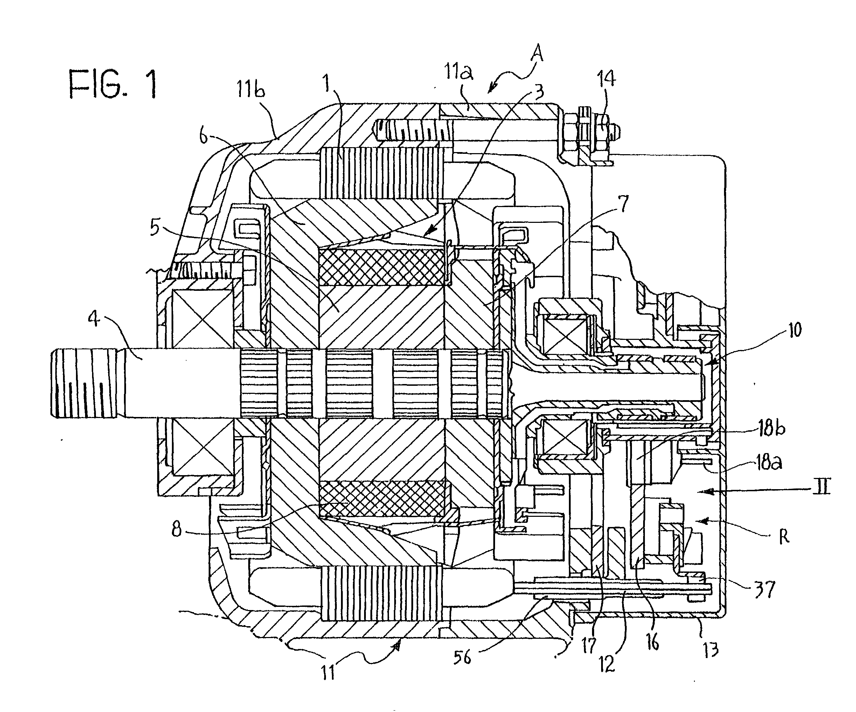

A three-phase alternator for motor vehicles is indicated A in Figure 1. The alternator comprises a stator 1 with a three-phase winding and a rotor 3 mounted on a shaft 4 coaxial therewith. The rotor 3 comprises a magnetic core 5 having pole extensions 6 and 7 arranged in a known, so-called interpenetrating-pole configuration. The field winding 8 is formed around the magnetic core of the rotor and is connected, in known manner, to a commutator 10 disposed at one end of the shaft 4. The alternator is enclosed in a casing 11 which is formed by the joining of two caps 11a and 11b, through which the end portions 12 of the stator-winding phase wires extend towards the exterior.

A rectifier R is fitted outside the cap 11a which encloses the alternator at the end having the commutator 10 and is protected in turn by an outer casing 13 fixed to the cap 11a by means of screws 14.

The rectifier R shown is of the bridge type with eight diodes and is intended for connection to a three-phase alternator the phases of which are connected to one another in a star connection.

In a configuration of this type, each phase is connected to the anode of a so-called positive diode and to the cathode of a so-called negative diode and is connected via this pair of diodes to the positive and negative terminals, respectively, of an energy accumulator/generator, for example, the motor vehicle battery. Three pairs of diodes are used in the connection with the phase terminals and a fourth pair in the connection with the star-centre terminal.

The solution according to the invention could be applied in a similar manner to a bridge rectifier for connection to an alternator the phases of which are connected to one another in a delta configuration, with the use of only six diodes since there is no connection to a common terminal such as the star-centre terminal.

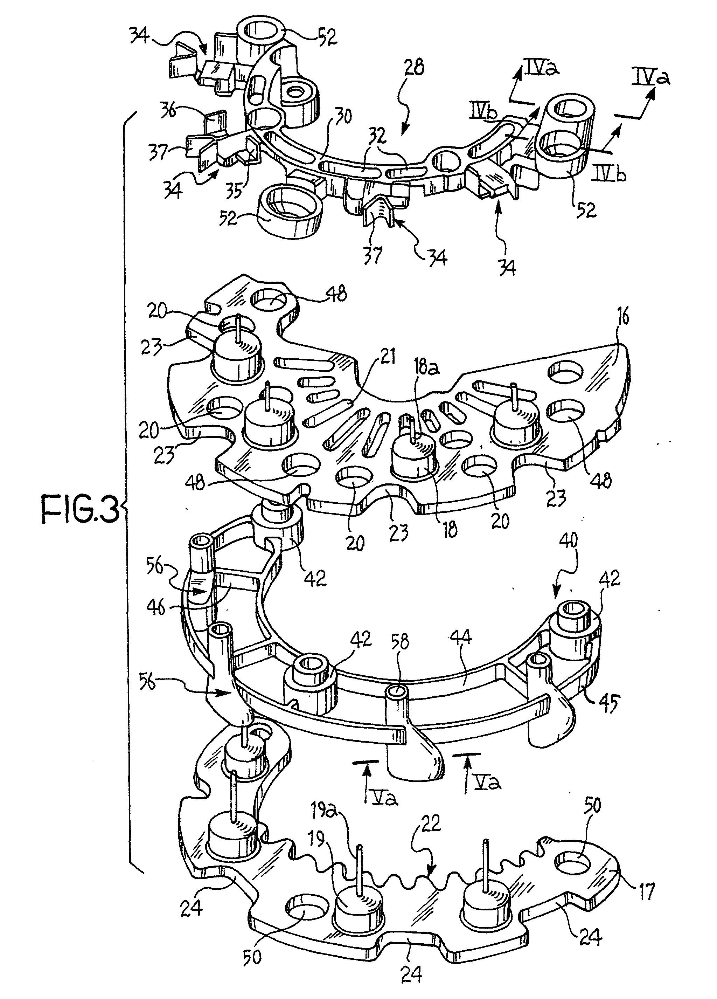

The components of the bridge rectifier R (hereinafter referred to more briefly as the rectifier) are described with particular reference to Figure 3.

The rectifier has two arcuate cooling conductor plates, that is, a positive plate 16 and a negative plate 17. Positive diodes 18 and negative diodes 19 are mounted on the respective plates, there being four diodes for each plate.

Each diode has a respective wire rheophore 18a, 19a extending rigidly in a direction perpendicular to the plates and a respective second, cup-shaped rheophore (only the rheophore 18b is visible in Figure 1) driven into a corresponding hole in the associated conductor plate.

Four through-holes 20 are formed in the positive plate 16 in positions corresponding to those in which the four negative diodes are mounted on the respective plate 17, in such a way to enable the wire rheophores 19a of these diodes to extend through the positive plate without contact therewith.

The positive plate 16 also has, in a radially inner portion, a plurality of ventilation holes 21; the corresponding portion of the negative plate 17, however, has an indented inner peripheral edge 22. Respective pluralities of notches 23 and 24 are formed in corresponding relative positions along the outer peripheral edges of both plates.

An interconnection structure, also of arcuate shape and generally indicated 28, is arranged parallel to the positive plate 16 on the opposite side to the negative plate 17.

This interconnection structure comprises a body 30 of insulating material in which a series of ventilation holes 32 is formed and from which four connecting conductor elements 34 separated from one another project radially. Each conductor element 34 has a first terminal 35 and a second terminal 36, both in the form of flat tabs for connection to the rheophore 18a of a positive diode and to the rheophore 19a of a negative diode, respectively, and a third V-shaped terminal 37 for connection to the end portions 12 of the wires of the phases and of the star-centre of the stator winding.

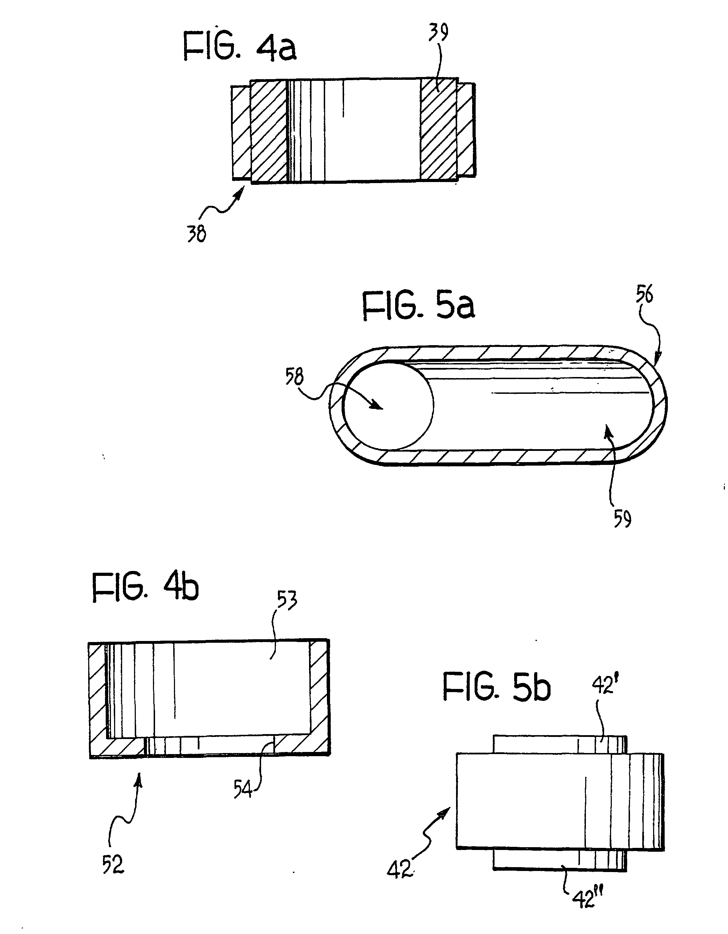

The interconnection structure also comprises an annular cylindrical portion 38 (also shown in Figure 4a) inside which there is a metal bush 39, for example, co-moulded therewith, provided for connecting the rectifier R to the positive pole of the battery.

The plates are separated by an insulating structure 40, also of arcuate shape, including a plurality of spacer members 42 connected by a framework formed by a pair of concentric arcuate elements, that is, an inner element 44 and an outer element 45, between which a plurality of spokes 46 extends radially.

The spacer members 42 (see also Figure 5b) are of an annular cylindrical shape and have smaller-diameter end portions 42' and 42" for insertion in corresponding holes 48, 50 provided in the positive plate and in the negative plate, respectively, and in positioning appendages 52 projecting from the interconnecting structure.

Each positioning appendage (see also Figure 4b) has a cylindrical recess 53 facing outwardly of the rectifier R and a hole 54 in the base of the recess facing a hole 48 in the positive plate.

In particular, each end portion 42' extends from the body of the member for a distance such as to extend through the positive plate and to engage at least partially in the corresponding hole 54 of the positioning appendage, whereas each portion 42", on the other hand, is arranged to engage in the respective hole 50 without projecting on the opposite side thereof.

Four tubular elements 56, formed at the points at which the spokes 46 are connected to the outer arcuate element 45, extend in a direction substantially perpendicular to the plates.

These tubular elements 56 are generally funnel-shaped, with respective openings 58 of smaller cross-section and substantially circular shape facing towards the terminals 37 of the interconnection structure and respective substantially scroll-shaped openings 59 of larger cross-section disposed on the side facing the negative plate.

During the assembly of the rectifier R, the insulating structure 40 is interposed between the plates 16 and 17, the end portion 42" of each spacer member 42 being inserted in the corresponding hole 50 provided in the negative plate 17 and the end portion 42' being inserted in the corresponding hole 48 provided in the positive plate 16.

In the assembled condition, the rheophores 19a of the negative diodes thus project beyond the plane of the positive plate 16, extending through the holes 20, and the tubular elements 56 are housed in the notches 23, 24.

The interconnection structure 28 is then aligned relative to the positive plate, the end portion 42' of each spacer member projecting from the surface of the positive plate being inserted in the corresponding hole 54 in the positioning appendage 52 and the holes 58 in the tubular elements 56 thus facing the V-shaped terminals 37.

Finally, the rectifier R is fitted on the alternator A, the negative plate 17 being brought into contact with the casing 12 of the alternator so as to form the electrical connection to the negative pole of the battery.

During fitting, the end portions 12 of the wires of the phases and of the star-centre of the stator winding are easily inserted in the tubular elements 56 through the holes 59 which are disposed in the vicinity of the winding, the end portions 12 being guided easily so as to emerge through the holes 58 in the region of the terminals 37 in suitable positions to be soldered thereto.

The rectifier is then fixed to the alternator by means of screw stays 60 which are inserted in the ducts defined in the positioning appendages 52 and in the respective spacer members 42, so as to reach their own seats formed in the casing. Upon completion of the fitting, the heads of the screw stays 60 are housed in the recesses 53 of the positioning appendages 52.

The electrical connection between the positive plate 16 and the positive pole of the battery is formed by the metal bush 39 present in the portion 38 of the interconnection structure, in which there is a terminal 62 for connection to the battery. The bush 39 is in contact with the positive plate 16 on one side and, on the opposite side, acts as a shoulder for the terminal 62, resisting the clamping pressure of a nut used to fix this terminal and advantageously reducing the voltage drop in this connection.

Naturally, the principle of the invention remaining the same, the forms of embodiment and details of construction may be varied widely with respect to those described and illustrated purely by way of non-limiting example, without thereby departing from the scope of protection of the present invention as defined by the appended claims.

## Claims

1. A rectifier (R) for an alternator (A), particularly for a motor vehicle, of the type comprising:
a pair of cooling conductor plates, that is, a positive plate (16) and a negative plate (17), which face one another but are insulated from one another and to which are connected, respectively, a set of positive diodes (18) and a set of negative diodes (19) having respective wire rheophores (18a, 19a) for connection to the phases of the alternator (A),
an interconnection structure (28) arranged substantially parallel to one of the conductor plates (16) on the opposite side to the other conductor plate (17) and comprising a body (30) of electrically insulating material incorporating connecting conductor elements (34) insulated from one another and each having a first terminal and a second terminal (35, 36) for connection to the rheophores (18a, 19a) of a positive diode (18) and of a negative diode (19), respectively, and a third terminal (37) for connection to a phase of the armature winding of the alternator (A), and
electrically insulating spacing means (42) arranged between the positive and negative plates (16, 17),
in which the positive and negative plates (16, 17) have, on their arcuate outer edges, respective pluralities of peripheral notches (23, 24) in corresponding relative positions and facing the said third terminals (37) of the interconnection structure (28),
**characterized in that** it comprises an insulating structure (40) between the plates (16, 17), comprising a rigid framework having a pair of concentric arcuate elements (44, 45) connected to one another by spokes (46), said structure (40) including the spacing means (42) and a plurality of tubular insulating elements (56), arranged at the points at which the spokes (46) are connected to the peripheral arcuate element (45) and extending in a direction substantially perpendicular to the plates (16, 17) in the regions of the peripheral notches (23, 24) formed therein,
the tubular elements (56) being adapted to house end portions (12) of the phase wires of the armature winding of the alternator (A) in a guided way towards the respective third terminals (37) of the interconnection structure (28), protecting the said portions (12) of the wires from contact with the conductor plates (16, 17).

2. A rectifier (R) according to Claim 1, **characterized in that** each tubular element (56) is funnel-shaped and is oriented in a manner such that its opening with a smaller cross-section (58) faces towards a third terminal (37) of the interconnection structure (28).

3. A rectifier (R) according to Claim 1 or Claim 2, **characterized in that** the conductor plate (16) which is arranged between the interconnection structure (28) and the other conductor plate (17) has a series of through-holes (20) in positions corresponding to the positions of the diodes (19) connected to the other plate (17), the through-holes (20) being of a size such that the wire rheophores (19a) of said diodes (19) extend through them.

## Patentansprüche

1. Gleichrichter (R) für einen Wechselstromgenerator (A), im Besonderen für ein Kraftfahrzeug, wobei der Gleichrichter enthält:
ein Paar von leitenden Kühlplatten, d.h. eine positive Platte (16) und eine negative Platte (17), die einander gegenüber liegen aber voneinander isoliert sind und mit denen eine Reihe von positiven Dioden (18) bzw. eine Reihe von negativen Dioden (19) verbunden ist, die entsprechende Drahtelektroden (18a, 19a) für den Anschluss an die Phasen des Wechselstromgenerators (A) besitzen;
einen Verbindungsaufbau (28), der im Wesentlichen parallel zu einer der leitenden Platten (16) an der Seite gegenüber der anderen leitenden Platte (17) angeordnet ist und einen Körper (30) aus einem elektrisch isolierenden Material enthält, in dem leitende Anschlusselemente (34) aufgenommen werden, die voneinander isoliert sind und von denen jedes einen ersten Anschluss und einen zweiten Anschluss (35, 36) besitzt, um eine Verbindung mit den Elektroden (18a, 19a) einer positiven Diode (18) bzw. einer negativen Diode (19) herzustellen, sowie einen dritten Anschluss (37) besitzt, um eine Verbindung mit einer Phase der Ankerwicklung des Wechselstromgenerators (A) herzustellen, und
elektrisch isolierende Abstandeinrichtungen (42), die zwischen der positiven und der negativen Platte (16, 17) angeordnet sind,
wobei die positive und die negative Platte (16, 17) an ihren gebogenen Außenkanten eine entsprechende Vielzahl von am Rand verlaufenden Einkerbungen (23, 24) an entsprechenden relativen Stellen besitzen, die den dritten Anschlüssen (37) des Verbindungsaufbaus (28) gegenüber liegen,
**dadurch gekennzeichnet, dass** der Gleichrichter einen Isolieraufbau (40) zwischen den Platten (16, 17) enthält, der ein starres Gerippe enthält, das ein Paar von konzentrischen, bogenförmigen Elementen (44, 45) besitzt, die miteinander über Speichen (46) verbunden sind, wobei der Aufbau (40) die Abstandeinrichtungen (42) sowie eine Vielzahl von rohrförmigen Isolierelementen (56) aufweist, die an jenen Stellen angeordnet sind, an denen die Speichen (46) mit dem am Rand verlaufenden bogenförmigen Element (45) verbunden sind, und die in eine Richtung im Wesentlichen senkrecht zu den Platten (16, 17) in den Bereichen der am Rand verlaufenden Einkerbungen (23, 24) verlaufen, die darin ausgebildet sind,
die rohrförmigen Elemente (56) so ausgebildet sind, dass sie die Endteile (12) der Phasenleitungen der Ankerwicklung des Wechselstromgenerators (A) so aufnehmen, dass sie zu den entsprechenden dritten Anschlüssen (37) des Verbindungsaufbaus (28) geführt werden, wobei diese Teile (12) der Leitungen vor einer Berührung mit den leitenden Platten (16, 17) geschützt werden.

2. Gleichrichter (R) gemäß Anspruch 1, **dadurch gekennzeichnet, dass** jedes rohrförmige Element (56) trichterförmig ausgebildet und so ausgerichtet ist, dass seine Öffnung mit einem kleineren Querschnitt (58) zu einem dritten Anschluss (37) des Verbindungsaufbaus (28) gerichtet ist.

3. Gleichrichter (R) gemäß Anspruch 1 oder Anspruch 2, **dadurch gekennzeichnet, dass** die leitende Platte (16), die zwischen dem Verbindungsaufbau (28) und der anderen leitenden Platte (17) angeordnet ist, eine Reihe von Durchgangsöffnungen (20) an Stellen besitzt, die den Stellen der Dioden (19) entsprechen, die mit der anderen Platte (17) verbunden sind, wobei die Durchgangsöffnungen (20) so groß sind, dass die Drahtelektroden (19a) dieser Dioden (19) durch sie verlaufen können.

## Revendications

1. Redresseur (R) pour un alternateur (A), en particulier pour un véhicule à moteur, du type comprenant :
une paire de plaques conductrices de refroidissement, c'est à dire une plaque positive (16) et une plaque négative (17), qui sont situées l'une en face de l'autre mais sont isolées l'une de l'autre et auxquelles sont connectées, respectivement, une série de diodes positives (18) et une série de diodes négatives (19) ayant des fils rhéophores respectifs (18a, 19a) pour la connexion aux phases de l'alternateur (A),
une structure d'interconnexion (28) agencée de manière sensiblement parallèle à l'une des plaques conductrices (16) sur le côté opposé à l'autre plaque conductrice (17) et comprenant un corps (30) de matériau électriquement isolant incorporant des éléments conducteurs de connexion (34) isolés les uns des autres et ayant chacun une première borne et une seconde borne (35, 36) pour la connexion aux rhéophores (18a, 19a) d'une diode positive (18) et d'une diode négative (19), respectivement, et une troisième borne (37) pour la connexion à une phase de l'enroulement d'armature de l'alternateur (A), et
un moyen d'espacement d'isolation électrique (42) agencé entre les plaques positive et négative (16, 17),
dans lequel les plaques positive et négative (16, 17) ont, sur leurs rebords extérieurs curvilignes, des pluralités respectives d'encoches périphériques (23, 24) dans des positions relatives correspondantes et faisant face audites troisièmes bornes (37) de la structure d'interconnexion (28),
**caractérisé en ce qu'**il comprend une structure d'isolation (40) entre les plaques (16, 17), comprenant une armature ayant une paire d'éléments curvilignes concentriques (44, 45) connectés l'un à l'autre par des rayons (46), ladite structure (40) comprenant le moyen d'espacement (42) et une pluralité d'éléments d'isolation tubulaires (56), agencés aux endroits où les rayons (46) sont connectés à l'élément curviligne périphérique (45) et s'étendant dans une direction sensiblement perpendiculaire aux plaques (16, 17) dans les zones des encoches périphériques (23, 24) qui y sont formées,
les éléments tubulaires (56) étant adaptés pour abriter des parties d'extrémité (12) des fils de phases de l'enroulement d'armature de l'alternateur (A) de manière guidée vers les troisièmes bornes respectives (37) de la structure d'interconnexion (28), protégeant lesdites parties (12) des fils contre tout contact avec les plaques conductrices (16, 17).

2. Redresseur (R) selon la revendication 1, **caractérisé en ce que** chaque élément tubulaire (56) est en forme d'entonnoir et est orienté de telle sorte que son ouverture avec une coupe transversale plus petite (58) est tournée vers une troisième borne (37) de la structure d'interconnexion (28).

3. Redresseur (R) selon la revendication 1 ou la revendication 2, **caractérisé en ce que** la plaque conductrice (16) qui est agencée entre la structure d'interconnexion (28) et l'autre plaque conductrice (17) possède une série d'orifices de passage (20) dans des positions qui correspondent aux positions des diodes (19) connectées à l'autre plaque (17), les orifices de passage (20) étant d'une dimension telle que les fils rhéophores (19a) desdites diodes (19) s'étendent à travers eux.
